# EUROPEAN PATENT APPLICATION

(11) **EP 4 391 200 A1**
(43) Date of publication of application: **26.06.2024**
(21) Application number: 22928471.6
(22) Date of filing: 29.12.2022
(51) Int. Cl.: H01M 50/502, H01M 50/512, H01M 50/531, H01M 50/547, H01M 50/147, H01M 50/572

(54) **SINGLE BATTERY, BATTERY, AND POWER UTILIZATION DEVICE**

(30) Priority: 25.02.2022 CN 202210180826
(71) Applicant: Contemporary Amperex Technology Co., Limited, Ningde City, Fujian 352100 (CN)
(72) Inventor: LIN, Denghua, NINGDE CITY, Fujian 352100 (CN); CHEN, Xinxiang, NINGDE CITY, Fujian 352100 (CN); HUANG, Shoujun, NINGDE CITY, Fujian 352100 (CN); CHEN, Long, NINGDE CITY, Fujian 352100 (CN); ZHENG, Yulian, NINGDE CITY, Fujian 352100 (CN); WANG, Peng, NINGDE CITY, Fujian 352100 (CN); JIN, Haizu, NINGDE CITY, Fujian 352100 (CN)
(74) Representative: Gong, Jinping
(86) International application number: PCT/CN2022/143219
(87) International publication number: WO 2023/160232

(57) **Abstract**

Embodiments of the present application provide a battery cell, a battery, and an electrical device. The battery cell includes a case, a first battery cell, and a second battery cell, the first battery cell being arranged inside the case, the first battery cell including a first main body part and a first electrode lead-out component extending from a first side of the first main body part, the second battery cell being arranged inside the case, and the second battery cell including a second main body part and a second electrode lead-out component extending from a second side of the second main body part, wherein the first battery cell and the second battery cell are arranged in a first direction, the first side of the first main body part and the second side of the second main body part are adjacent and arranged oppositely, the first electrode lead-out component includes a first connection surface inclined with respect to the first direction, the second electrode lead-out component includes a second connection surface inclined with respect to the first direction, and the first connection surface is electrically connected to the second connection surface. The battery cell of the present application has strong anti-extrusion capability and can effectively protect the battery cell.

## Description

### Cross-Reference to Related Applications

The present application claims priority to Chinese Application No. 202210180826.5 filed on February 25, 2022, and disclosed content of the Chinese Application is incorporated in the present application in its entirety.

### Technical Field

The present application relates to the field of battery technologies, and specifically, to a battery cell, a battery, and an electrical device.

### Background

With energy saving and emission reduction being the key to the sustainable development of the automobile industry, electric vehicles have become an important part of the sustainable development of automotive industry due to their advantages of energy saving and environmental protection. For the electric vehicles, the battery technology is an important factor related to their development.

A battery cell may be subject to an extrusion force inside a battery, and the anti-extrusion capability of the battery cell will affect the service life of the battery.

### Summary of the Invention

The present application provides a battery cell, a battery, and an electrical device, which can improve the anti-extrusion capability of the battery cell.

In a first aspect, the present application provides a battery cell, including a case, a first battery cell, and a second battery cell, the first battery cell being arranged inside the case, the first battery cell including a first main body part and a first electrode lead-out component extending from a first side of the first main body part, the second battery cell being arranged inside the case, and the second battery cell including a second main body part and a second electrode lead-out component extending from a second side of the second main body part; wherein the first battery cell and the second battery cell are arranged in a first direction, the first side of the first main body part and the second side of the second main body part are adjacent and arranged oppositely, the first electrode lead-out component includes a first connection surface inclined with respect to the first direction, the second electrode lead-out component includes a second connection surface inclined with respect to the first direction, and the first connection surface is electrically connected to the second connection surface.

By arranging the first connection surface inclined with respect to the first direction and the second connection surface inclined with respect to the first direction, and making the first electrode lead-out component and a third electrode lead-out component to be electrically connected through the first connection surface and the second connection surface, a part of the extrusion force that brings the first battery cell and the second battery cell closer to each other may be decomposed in a direction perpendicular to the first direction, thereby alleviating the extrusion impact suffered by the first electrode lead-out component and the third electrode lead-out component, and thus improving the service life of the first battery cell and the second battery cell.

In addition, by arranging the first connection surface and the second connection surface to be inclined with respect to the first direction, the lengths of the first electrode lead-out component and the third electrode lead-out component in the first direction can also be shortened, thereby saving the space occupied by the first electrode lead-out component and the third electrode lead-out component, thereby achieving the purpose of reducing the volume of the battery cell.

In some embodiments, the first connection surface is a plane and perpendicular to the first direction; and/or the second connection surface is a plane and perpendicular to the first direction. The first connection surface and the second connection surface are arranged as planes perpendicular to the first direction, so that the first connection surface and the second connection surface can bear the extrusion force, which greatly alleviates the impact on the first electrode lead-out component and the third electrode lead-out component, and improves the service life of the first battery cell and the second battery cell; it can also save the space occupied by the first electrode lead-out component and the third electrode lead-out component to a large extent, thereby reducing the volume of the battery cell and improving the energy density of the battery cell.

In some embodiments, the battery cell further includes an adapter sheet, and the adapter sheet is connected between the first connection surface and the second connection surface. By arranging the adapter sheet between the first connection surface and the second connection surface, the anti-extrusion capability of the first battery cell and the second battery cell can be improved, thereby increasing the service life of the first battery cell and the second battery cell. By arranging the adapter sheet, the risk of the first electrode lead-out component and the third electrode lead-out component being inserted into each other when being extruded can also be reduced.

In some embodiments, the adapter sheet includes a compressible portion. The compressible portion has the ability to deform, and the extrusion force is alleviated through the deformation of the compressible portion. The compressible portion may include an elastic portion or a grooved component. The elastic portion may adopt a spring, a rubber pad, or the like.

In some embodiments, the adapter sheet includes a first supporting portion and a second supporting portion connected to each other, the first supporting portion supports the first connection surface, the second supporting portion supports the second connection surface, and a groove is arranged between the first supporting portion and the second supporting portion. By arranging the groove, the adapter sheet has compressibility. When the first supporting portion or the second supporting portion is subjected to the extrusion force, due to the existence of the groove, the first supporting portion or the second supporting portion can be inclined to be closer to each other, so as to absorb part of the extrusion force, reduce the impact on the first electrode lead-out component and the third electrode lead-out component, and effectively protect the first battery cell and the second battery cell.

In some embodiments, the first supporting portion includes a first supporting surface attached to the first connection surface, and the second supporting portion includes a second supporting surface attached to the second connection surface. By arranging the first supporting surface attached to the first connection surface and the second supporting surface attached to the second connection surface, the first supporting portion and the second supporting portion can respectively improve the supporting stability for the first connection surface and the second connection surface.

In some embodiments, the first electrode lead-out component further includes a first connecting portion extending in the first direction, the second electrode lead-out component further includes a second connecting portion extending in the first direction, and the adapter sheet includes a third supporting portion connected to the first supporting portion and a fourth supporting portion connected to the second supporting portion. The third supporting portion is used for supporting the first connecting portion, and the fourth supporting portion is used for supporting the second connecting portion. By arranging the third supporting portion and the fourth supporting portion, the supporting capacity of the adapter sheet for the first electrode lead-out component and the third electrode lead-out component can be further improved, and the connection between the first electrode lead-out component and the third electrode lead-out component can be strengthened, thereby improving the anti-extrusion capability of the first electrode lead-out component and the third electrode lead-out component.

In some embodiments, the first electrode lead-out component includes a first positive tab and a first negative tab, the second electrode lead-out component includes a second positive tab and a second negative tab, and the first positive tab is electrically connected to the second positive tab, and the first negative tab is electrically connected to the second negative tab. In this way, the first battery cell and the second battery cell are connected in parallel. Compared with the series connection, the parallel connection between the first battery cell and the second battery cell can reduce the risk of short circuit in a local loop and prevent the electrolyte from being in a high-pressure environment.

In some embodiments, a length direction of the first battery cell is parallel to the first direction, and a length direction of the second battery cell is parallel to the first direction. Such an arrangement allows the first battery cell and the second battery cell to be arranged in the length direction thereof, and the electrode lead-out components respectively extending from both ends of the first battery cell and the second battery cell may be located on shorter sides of the battery cell, thereby effectively reducing the volume of the battery cell.

In some embodiments, the first battery cell includes a third tab that is lead out from a third side of the first main body part opposite to the first side, and the second battery cell includes a fourth tab that is lead out from a fourth side of the second main body part opposite to the second side, and the third tab and the fourth tab have opposite polarities. The first battery cell and the second battery cell each include three tabs.

In some embodiments, the battery cell further includes a first terminal post and a second terminal post, the first terminal post is electrically connected to the third tab, and the second terminal post is electrically connected to the fourth tab. In the embodiment, the battery cell includes two terminal posts, and the two terminal posts are respectively electrically connected to the third tab extending from the second side of the first main body part and the fourth tab extending from the fourth side of the second main body part.

In some embodiments, the battery cell further includes a first cover plate and a second cover plate, the case is provided with a first opening and a second opening arranged oppositely in the first direction, the first cover plate and the second cover plate respectively close the first opening and the second opening, the first terminal post is arranged on the first cover plate, and the second terminal post is arranged on the second cover plate.

In the embodiment of the present application, the first opening and the second opening are arranged oppositely in the first direction. Therefore, the first cover plate closing the first opening is close to the third tab, and the first terminal post is arranged on the first cover plate. Therefore, the distance between the third tab and the first terminal post can be effectively shortened, which facilitates the connection between the third tab and the first terminal post, and is also conducive to shortening the length of the third tab, thereby reducing the space occupied by the third tab and reducing the volume of the battery cell. Similarly, the second cover plate closing the second opening is close to the fourth tab, and the second terminal post is arranged on the second cover plate; therefore, the distance between the fourth tab and the second terminal post can be effectively shortened, which facilitates the connection between the fourth tab and the second terminal post, and is also conducive to shortening the length of the fourth tab, thereby reducing the space occupied by the fourth tab and reducing the volume of the battery cell.

In some embodiments,
The first main body part includes a first positive electrode plate, a first negative electrode plate, and a first separator. The first positive electrode plate and the first negative electrode plate are wound or laminated to form the first main body part. The first separator is arranged between the first positive electrode plate and the first negative electrode plate. A first end of the first positive electrode plate extends from the third side of the first main body part to form the third tab, and a first end of the first negative electrode plate is flush with the third side of the first main body part. Alternatively, the first end of the first negative electrode plate extends from the third side of the first main body part to form the third tab, and the first end of the first positive electrode plate is flush with the third side of the first main body part; and/or,

the second main body part includes a second positive electrode plate, a second negative electrode plate, and a second separator. The second positive electrode plate and the second negative electrode plate are wound or laminated to form the second main body part. The second separator is arranged between the second positive electrode plate and the second negative electrode plate. A first end of the second positive electrode plate extends from the fourth side of the second main body part to form the fourth tab, and a first end of the second negative electrode plate is flush with the fourth side of the second main body part. Alternatively, the first end of the second negative electrode plate extends from the fourth side of the second main body part to form the fourth tab, and the first end of the second positive electrode plate is flush with the fourth side of the second main body part.

By arranging the electrode plate with the polarity opposite to the third tab to be flush with the third side, the electrode plate may be prevented from protruding, thereby shortening the length of the electrode plate, which may not only save the material of the electrode plate, but also reduce operations related to insulating the electrode plate, and save insulating components used for insulating the electrode plate from other live parts.

By arranging the electrode plate with the polarity opposite to the fourth tab to be flush with the fourth side, the electrode plate may be prevented from protruding, thereby shortening the length of the electrode plate, which may not only save the material of the electrode plate, but also reduce operations related to insulating the electrode plate, and save insulating components used for insulating the electrode plate from other live parts.

In some embodiments, the first battery cell includes a third positive tab and a third negative tab that are led out from a third side of the first main body part opposite to the first side, and the second battery cell includes a fourth positive tab and a fourth negative tab that are led out from a fourth side of the second main body part opposite to the second side. The first battery cell and the second battery cell each include four tabs.

In some embodiments, the battery cell further includes a first terminal post, a second terminal post, a third terminal post, and a fourth terminal post, the first terminal post is electrically connected to the third positive tab, the third terminal post is electrically connected to the third negative tab, the second terminal post is electrically connected to the fourth positive tab, and the fourth terminal post is electrically connected to the fourth negative tab. In the embodiment, the battery cell includes four terminal posts, and the four terminal posts are respectively electrically connected to the two tabs extending from the second side of the first main body part and the two tabs extending from the fourth side of the second main body part. By arranging the four terminal posts, the discharge capacity of the battery cell can be effectively improved.

In some embodiments, the battery cell further includes a first cover plate and a second cover plate, the case is provided with a first opening and a second opening arranged oppositely in the first direction, the first cover plate and the second cover plate respectively close the first opening and the second opening, the first terminal post and the third terminal post are arranged on the first cover plate, and the second terminal post and the fourth terminal post are arranged on the second cover plate.

In the embodiment of the present application, the first opening and the second opening are arranged oppositely in the first direction. Therefore, the first cover plate closing the first opening is close to the third positive tab and the third negative tab, and the first terminal post and the third terminal post are both arranged on the first cover plate. Therefore, the distance between the first terminal post and the third positive tab and the distance between the third terminal post and the third negative tab can be effectively shortened, which facilitates the connections between the first terminal post and the third positive tab and between the third terminal post and the third negative tab, and is also conducive to shortening the lengths of the third positive tab and the third negative tab, thereby reducing the space occupied by the third positive tab and the third negative tab and reducing the volume of the battery cell. Similarly, the second cover plate closing the second opening is close to the fourth positive tab and the fourth negative tab, and the second terminal post and the fourth terminal post are both arranged on the second cover plate. Therefore, the distance between the second terminal post and the fourth positive tab and the distance between the fourth terminal post and the fourth negative tab can be effectively shortened, which facilitates the connections between the second terminal post and the fourth positive tab and between the fourth terminal post and the fourth negative tab, and is also conducive to shortening the lengths of the fourth positive tab and the fourth negative tab, thereby reducing the space occupied by the fourth positive tab and the fourth negative tab and reducing the volume of the battery cell.

In a second aspect, the present application provides a battery, including the battery cell in the above embodiment.

In a third aspect, the present application provides an electrical device, including the battery cell and/or battery in the above embodiment, for supplying electric energy to the electrical device.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a schematic structural view of some embodiments of an electrical device disclosed in the present application;
Fig. 2 is a schematic structural view of some embodiments of a battery disclosed in the present application;
Fig. 3 is an exploded view of some embodiments of a battery cell disclosed in the present application;
Fig. 4 is a schematic structural view of some embodiments of a battery cell disclosed in the present application;
Fig. 5 is a front view of some embodiments of a battery cell disclosed in the present application;
Fig. 6 is a top view of some embodiments of a battery cell disclosed in the present application;
Fig. 7 is an enlarged view of a part shown by a mark A in Fig. 6;
Fig. 8 is a top view of some other embodiments of a battery cell disclosed in the present application;
Fig. 9 is an enlarged view of a part shown by a mark B in Fig. 8;
Fig. 10 is a schematic structural view of a first battery cell in some embodiments of a battery cell disclosed in the present application;
Fig. 11 is a schematic structural view of a second battery cell in some embodiments of a battery cell disclosed in the present application;
Fig. 12 is an exploded view of some other embodiments of a battery cell disclosed in the present application;
Fig. 13 is a schematic structural view of some other embodiments of a battery cell disclosed in the present application; and
Fig. 14 is a front view of some other embodiments of a battery cell disclosed in the present application.

In the drawings, the drawings are not drawn to actual scale.

Description of reference numerals:
1000. Vehicle; 100. Battery; 200. Controller; 300. Motor;
10a. Box body; 101a. First cover body; 102a. Second cover body; 20a. Battery cell;
1. Case; 11. First opening; 12. Second opening;
2. First battery cell; 21. First main body part; 2a. First electrode lead-out component; 2b. Third electrode lead-out component; 22. First positive tab; 221. First connection surface; 222. First connecting portion; 23. First negative tab; 24. Third tab; 25. Third positive tab; 26. Third negative tab;
3. Second battery cell; 31. Second main body part; 3a. Second electrode lead-out component; 3b. Fourth electrode lead-out component; 32. Second positive tab; 321. Second connection surface; 322. Second connecting portion; 33. Second negative tab; 34. Fourth tab; 35. Fourth positive tab; 36. Fourth negative tab;
4. First cover plate; 5. Second cover plate; 61. First terminal post; 62. Third terminal post; 71. Second terminal post; 72. Fourth terminal post; 8. Bracket; 9. Explosion-proof valve; 9a. Patch;
10. Adapter sheet; 101. First supporting portion; 101A. First supporting surface; 102. Second supporting portion; 102A. Second supporting surface; 103. Third supporting portion; 104. Fourth supporting portion; 105. Groove;
x. First direction; S1. First side; S2. Second side; S3. Third side; S4. Fourth side.

### Detailed Description

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first," "second," and the like are used only for distinguishing between different objects, and are not to be understood as indicating or implying a relative importance or implicitly specifying the number, particular order, or primary and secondary relation of the technical features indicated. Furthermore, the term "vertical" is not vertical in the strict sense, but is within the margin of error allowed. "Parallel" is not parallel in the strict sense, but within the margin of error allowed.

Reference herein to "an embodiment" means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example, A and/or B may represent three situations: A exists alone, both A and B exist, and B exists alone. In addition, the character "/" herein generally means that the associated objects before and after it are in an "or" relationship.

In the description of the embodiments of the present application, the meaning of "a plurality of" is two or more, unless otherwise explicitly and specifically defined. Similarly, "a plurality of groups" refers to two or more groups, and "a plurality of sheets" refers to two or more sheets, unless otherwise explicitly and specifically defined.

In the description of the embodiments of the present application, the orientation or position relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," and the like are based on the orientation or position relationship shown in the drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. The power batteries are not only applied in energy storage power supply systems such as hydraulic, thermal, wind, and solar power stations, but also further widely applied in electric vehicles such as electric bicycles, electric motorcycles, and electric cars, and a plurality of fields such as military equipment and aerospace. With the continuous expansion of the application field of the power batteries, the market demand is also constantly expanding.

With the continuous popularity of the power batteries, users have put forward higher requirements for the capacity of the power batteries. The inventor of the present application noticed that in order to meet the gradually increasing capacity requirements, many designers choose to increase the length of a battery cell.

However, after research, the inventor of the present application finds that in a winding and manufacturing process of a long battery cell, an electrode plate is easily wrinkled, which affects the production efficiency.

In order to solve the problem of electrode plate wrinkles, a plurality of regular-length battery cells can be installed in one battery cell. This can not only avoid the electrode plate wrinkle problem that easily occurs in the manufacturing process of long battery cells, but also achieve the purpose of increasing battery capacity by increasing the number of batteries. Moreover, compared with the solution of arranging a case and electrical connection components outside each battery cell of a regular length, arranging a plurality of battery cells in the same case can effectively save some assembling processes, and can also save some electrical connecting components and the like, which thus can save cost significantly.

Furthermore, the inventor of the present application considered that when a plurality of battery cells are arranged in the same case, there will be a connection problem between two battery cells. In the related art, an extension direction of electrical connecting portions between two battery cells is parallel to an arrangement direction of the two battery cells, so that there is a risk of the electrical connecting portions being inserted into each other when the battery cells are extruded.

In order to improve the anti-extrusion capability of the battery cells, the inventor of the present application proposed that the electrical connecting portions of the two battery cells can be arranged to be inclined with respect to the arrangement direction of the two battery cells, so that a part of the extrusion force can be decomposed in a direction perpendicular to the arrangement direction, thereby alleviating the extrusion impact, effectively protecting the electrical connecting portions, and further protecting the two battery cells and improving the service life of the two battery cells.

Based on the above ideas, the inventor of the present application has improved the structure of the battery cell, thereby effectively improving the anti-extrusion capability of the battery cell.

The embodiments of the present application provide a battery including a battery cell. The battery may be used, but not limited to, in electrical device such as a vehicle, a ship, or an aircraft. A power supply system of the electrical device may be composed of battery cells, batteries, and the like disclosed in the present application.

The embodiments of the present application provide an electrical device that uses a battery as a power supply, and the battery is configured to supply electric energy to the electrical device. The electrical device may be, but is not limited to, a mobile phone, a portable device, a laptop, a battery vehicle, an electric vehicle, a ship, a spacecraft, an electronic toy, an electric tool, and the like. For example, the spacecraft includes an airplane, a rocket, a space shuttle, a spaceship, and the like; the electronic toy includes a fixed or mobile electronic toy, such as a game console, an electric vehicle toy, an electric ship toy, and an electric aircraft toy; and the electric tool includes a metal-cutting power tool, a grinding power tool, an assembling power tool, and a railway power tool, such as an electric drill, an electric grinder, an electric wrench, an electric screwdriver, an electric hammer, an electric impact drill, a concrete vibrator, and an electric planer.

For the convenience of describing the following embodiments, illustration is made with an example in which the electrical device according to some embodiments of the present application is a vehicle 1000.

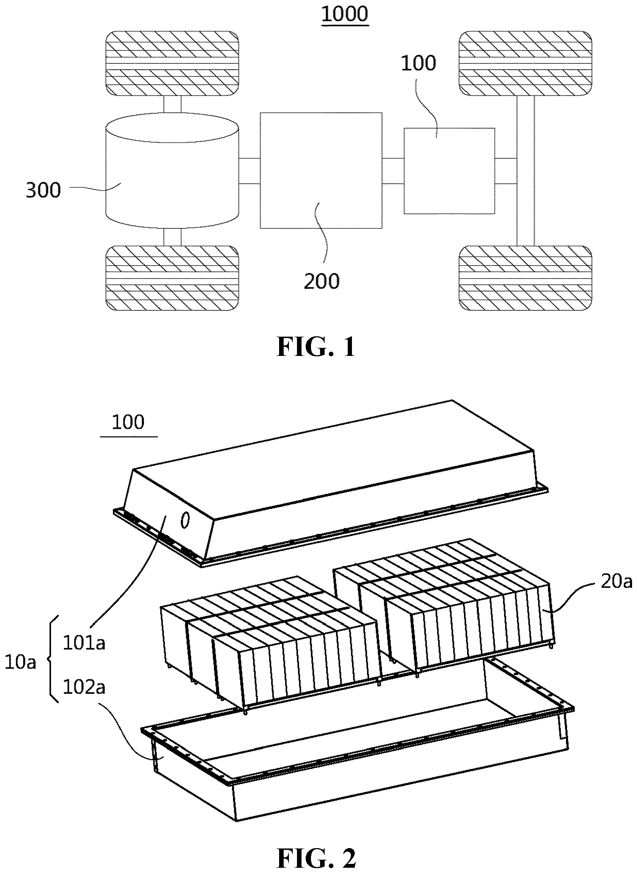

Referring to Fig. 1, Fig. 1 is a schematic structural view of a vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The interior of the vehicle 1000 is provided with a battery 100, and the battery 100 may be arranged at the bottom or head or tail of the vehicle 1000. The battery 100 may be used for powering the vehicle 1000. For example, the battery 100 may be used as an operating power supply of the vehicle 1000. The vehicle 1000 may further include a controller 200 and a motor 300. The battery 100 may be used for supplying electric energy for the motor 300 and other components in the vehicle. The controller 200 is used for controlling operation of the motor 300, for example, for meeting operating power demands when the vehicle 1000 is starting, navigating, and driving.

In some embodiments of the present application, the battery 100 not only may serve as an operating power supply of the vehicle 1000, but also may serve as a driving power supply of the vehicle 1000, thus replacing or partially replacing fuel or natural gas to provide driving power for the vehicle 1000.

Referring to Fig. 2, Fig. 2 is an exploded view of a battery 100 according to some embodiments of the present application. The battery 100 includes a box body 10a and a battery cell 20a, and the battery cell 20a is accommodated within the box body 10a. The box body 10a is used for providing an accommodating space for the battery cell 20a, and the box body 10a may adopt various structures. In some embodiments, the box body 10a may include a first cover body 101a and a second cover body 102a, the first cover body 101a and the second cover body 102a are covered to each other, and the first cover body 101a and the second cover body 102a together define an accommodating space for accommodating the battery cell 20a. The second cover body 102a may be a hollow structure with one end open, the first cover body 101a may be a plate-like structure, and the first cover body 101a covers the opening side of the second cover body 102a, so that the first cover body 101a and the second cover body 102a together define the accommodating space. The first cover body 101a and the second cover body 102a may also each be a hollow structure with one side open, and the opening side of the first cover body 101a covers the opening side of the second cover body 102a. Of course, the box body 10a formed by the first cover body 101a and the second cover body 102a may be of various shapes, such as a cylinder or a cuboid.

In the battery 100, there may be a plurality of battery cells 20a, and the plurality of battery cells 20a may be in series connection, parallel connection, or parallel-series connection, wherein the parallel-series connection means that the plurality of battery cells 20a are connected in both series and parallel. The plurality of battery cells 20a may be directly in series connection, parallel connection, or parallel-series connection, and then the whole composed of the plurality of battery cells 20a may be accommodated in the box body 10a. Of course, the battery 100 may also be that a plurality of battery cells 20a are in series connection, parallel connection, or parallel-series connection first to form battery modules, and the plurality of battery modules are then in series connection, parallel connection, or parallel-series connection to form a whole accommodated in the box body 10a. The battery 100 may further include other structures. For example, the battery 100 may further include a convergence component for implementing electrical connections between the plurality of battery cells 20a.

The battery cell 20a is the smallest unit forming the battery. The battery cell 20a includes a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cells may be cylindrical, flat, rectangular, or in other shapes, which is not limited in the embodiments of the present application. The battery cells are generally classified into three types according to packaging manners: cylindrical battery cells, rectangular battery cells, and pouch cells, which are not limited in the embodiments of the present application.

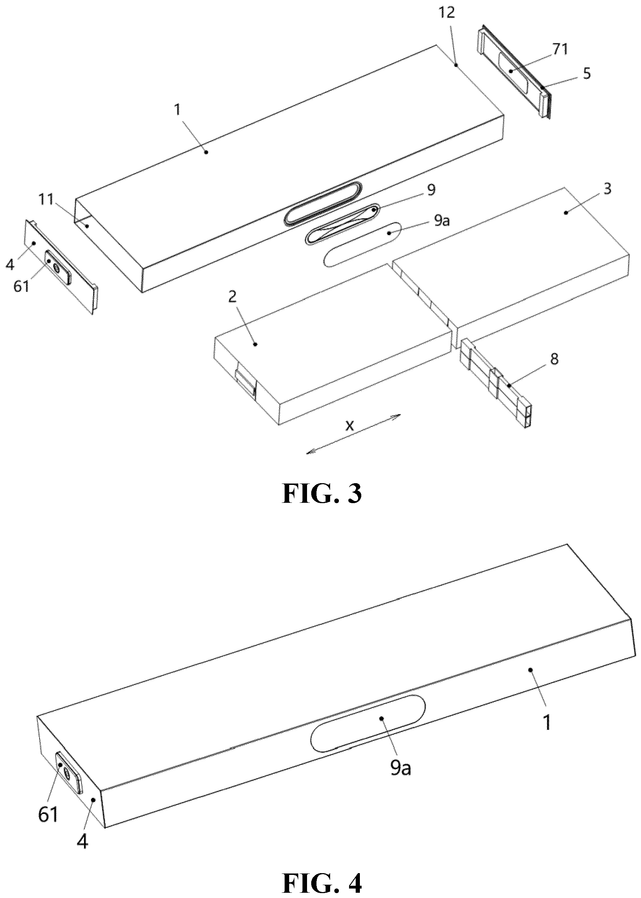

Referring to Fig. 3 to Fig. 7, which are respectively an exploded view, a schematic three-dimensional structural view, a front view, and a top view of a battery cell 20a according to some embodiments of the present application. In some embodiments provided in the present application, the battery cell 20a includes a case 1, a first battery cell 2, and a second battery cell 3. The first battery cell 2 and the second battery cell 3 are both arranged inside the case 1.

The case 1 is a component used for providing an accommodating space for accommodating the first battery cell 2 and the second battery cell 3, an electrolyte solution, and other components therein. The case 1 may be of various shapes and in various sizes, such as rectangular parallelepiped, cylinder, and hexagonal prism. Specifically, the shape of the case 1 may be determined according to the specific shapes and sizes of the first battery cell 2 and the second battery cell 3. The material of the case 1 may be selected from metal materials such as copper, iron, aluminum, stainless steel, and aluminum alloy, or non-metal materials such as plastic.

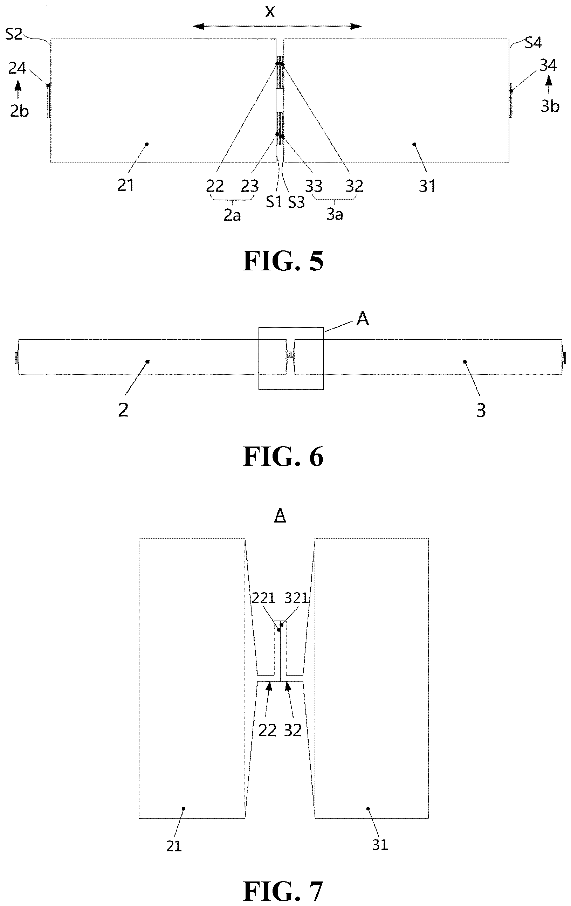

As shown in Fig. 5, the first battery cell 2 is arranged inside the case 1. The first battery cell 2 includes a first main body part 21 and a first electrode lead-out component 2a extending from a first side S1 of the first main body part 21. The second battery cell 3 is arranged inside the case 1. The second battery cell 3 includes a second main body part 31 and a second electrode lead-out component 3a extending from a second side S2 of the second main body part 31. The first battery cell 2 and the second battery cell 3 are arranged in a first direction x, and the first side S1 of the first main body part 21 and the second side S2 of the second main body part 31 are adjacent and arranged oppositely.

As shown in Fig. 5, the direction indicated by an indicator line with a double arrow is the first direction x. In the embodiment of the battery cell provided in the present application, the first battery cell 2 and the second battery cell 3 are arranged in the first direction x, and a center line of the first battery cell 2 and a center line of the second battery cell 3 are colinear and parallel to the first direction x. The first side S1 of the first battery cell 2 and the second side S2 of the second battery cell 3 are adjacent and arranged oppositely, so that the first electrode lead-out component 2a located on the first side S1 and the second electrode lead-out component 3a located on the second side S2 are close to each other, and the first battery cell 2 and the second battery cell 3 are electrically connected through the electrical connection between the first electrode lead-out component 2a and the second electrode lead-out component 3a. At the same time, a third side S3 of the first battery cell 2 that is opposite to the first side S 1 and a fourth side S4 of the second battery cell 3 that is opposite to the second side S2 are away from each other, and a third electrode lead-out component 2b extends from the third side S3, a fourth electrode lead-out component 3b extends from the fourth side S4, and the third electrode lead-out component 2b and the fourth electrode lead-out component 3b may respectively serve as two electrodes of the battery cell, so that the connection of the first battery cell 2 and the second battery cell 3 and the two electrode connecting components of the battery cell are all arranged in the first direction x, which is conducive to optimizing the internal structural arrangement of the battery cell, thereby helping reduce the volume of the battery cell.

As shown in Fig. 7, the first electrode lead-out component 2a includes a first connection surface 221 inclined with respect to the first direction x, and the second electrode lead-out component 3a includes a second connection surface 321 inclined with respect to the first direction x. The first connection surface 221 is electrically connected to the second connection surface 321. Here, "inclined" means arranged to form an angle with respect to the first direction x.

By arranging the first connection surface 221 inclined with respect to the first direction x and the second connection surface 321 inclined with respect to the first direction x, and making the first electrode lead-out component 2a and the second electrode lead-out component 3a to be electrically connected through the first connection surface 221 and the second connection surface 321, a part of the extrusion force that brings the first battery cell 2 and the second battery cell 3 closer to each other may be decomposed in a direction perpendicular to the first direction x, thereby alleviating the extrusion impact suffered by the first electrode lead-out component 2a and the second electrode lead-out component 3a, and thus improving the service life of the first battery cell 2 and the second battery cell 3.

In addition, by arranging the first connection surface 221 and the second connection surface 321 to be inclined with respect to the first direction x, the lengths of the first electrode lead-out component 2a and the second electrode lead-out component 3a in the first direction x can also be shortened, thereby saving the space occupied by the first electrode lead-out component 2a and the second electrode lead-out component 3a, and achieving the purpose of reducing the volume of the battery cell.

In some embodiments, the first connection surface 221 is a plane and perpendicular to the first direction x; and/or the second connection surface 321 is a plane and perpendicular to the first direction x. The first connection surface 221 and the second connection surface 321 are arranged as planes perpendicular to the first direction x, so that the first connection surface 221 and the second connection surface 321 can bear the extrusion force, which greatly alleviates the impact on the first electrode lead-out component 2a and the second electrode lead-out component 3a, and improves the service life of the first battery cell 2 and the second battery cell 3; it can also save the space occupied by the first electrode lead-out component 2a and the second electrode lead-out component 3a to a large extent, thereby reducing the volume of the battery cell and improving the energy density of the battery cell.

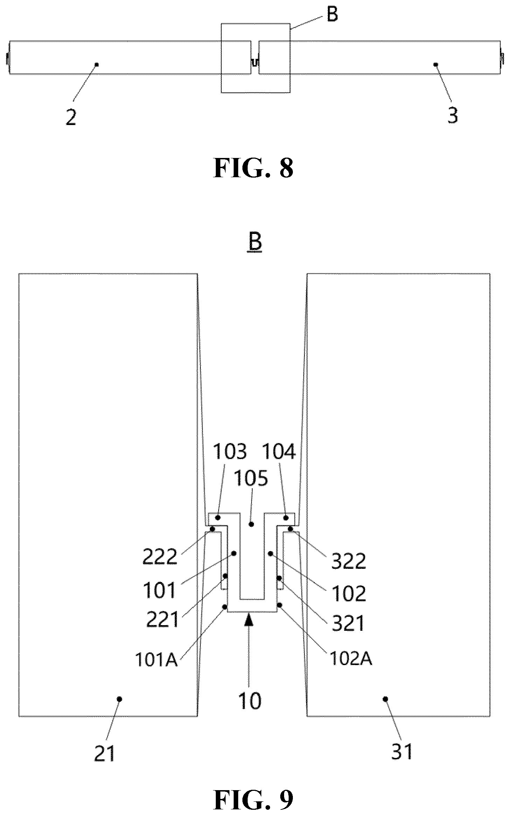

As shown in Fig. 9, in some embodiments, the battery cell further includes an adapter sheet 10, and the adapter sheet 10 is connected between the first connection surface 221 and the second connection surface 321. By arranging the adapter sheet 10 between the first connection surface 221 and the second connection surface 321, the anti-extrusion capability of the first battery cell 2 and the second battery cell 3 can be improved, thereby increasing the service life of the first battery cell 2 and the second battery cell 3. By arranging the adapter sheet 10, the risk of the first electrode lead-out component 2a and the second electrode lead-out component 3a being inserted into each other when being extruded can also be reduced.

In some embodiments, the adapter sheet 10 includes a compressible portion. The compressible portion has the ability to deform, and the extrusion force is alleviated through the deformation of the compressible portion. The compressible portion may include an elastic portion or a grooved component. The elastic portion may adopt a spring, a rubber pad, or the like.

In some embodiments, the adapter sheet 10 includes a first supporting portion 101 and a second supporting portion 102 connected to each other, the first supporting portion 101 supports the first connection surface 221, the second supporting portion 102 supports the second connection surface 321, and a groove 105 is arranged between the first supporting portion 101 and the second supporting portion 102. By arranging the groove 105, the adapter sheet 10 has compressibility. When the first supporting portion 101 or the second supporting portion 102 is subjected to the extrusion force, due to the existence of the groove 105, the first supporting portion 101 or the second supporting portion 102 can be inclined to be closer to each other, so as to absorb part of the extrusion force, reduce the impact on the first electrode lead-out component 2a and the second electrode lead-out component 3a, and effectively protect the first battery cell 2 and the second battery cell 3.

In some embodiments, the first supporting portion 101 includes a first supporting surface 101A attached to the first connection surface 221, and the second supporting portion 102 includes a second supporting surface 102A attached to the second connection surface 321. By arranging the first supporting surface 101A attached to the first connection surface 221 and the second supporting surface 102A attached to the second connection surface 321, the first supporting portion 101 and the second supporting portion 102 can respectively improve the supporting stability for the first connection surface 221 and the second connection surface 321.

In some embodiments, the first electrode lead-out component 2a further includes a first connecting portion 222 extending in the first direction x, the second electrode lead-out component 3a further includes a second connecting portion 322 extending in the first direction x, and the adapter sheet 10 includes a third supporting portion 103 connected to the first supporting portion 101 and a fourth supporting portion 104 connected to the second supporting portion 102. The third supporting portion 103 is used for supporting the first connecting portion 222, and the fourth supporting portion 104 is used for supporting the second connecting portion 322.

By arranging the third supporting portion 103 and the fourth supporting portion 104, the supporting capacity of the adapter sheet 10 for the first electrode lead-out component 2a and the second electrode lead-out component 3a can be further improved, and the connection between the first electrode lead-out component 2a and the second electrode lead-out component 3a can be strengthened, thereby improving the anti-extrusion capability of the first electrode lead-out component 2a and the second electrode lead-out component 3a.

In some embodiments, the first connection surface 221 is arranged on a first positive tab 22, the second connection surface 321 is arranged on a second positive tab 32, and a first negative tab 23 may include a third connection surface inclined with respect to the first direction x, a second negative tab 33 may include a fourth connection surface inclined with respect to the first direction x, and the third connection surface is electrically connected to the fourth connection surface.

In some embodiments, another adapter sheet may be arranged between the third connection surface and the fourth connection surface, and the structure of the adapter sheet may be the same as or different from the structure of the adapter sheet 10.

In some embodiments, three or more battery cells may be arranged in the case 1, and the three or more battery cells are arranged in the first direction x.

In some embodiments, the first battery cell 2 and the second battery cell 3 may be in series connection, parallel connection, or parallel-series connection.

In some embodiments, the first electrode lead-out component 2a includes a first positive tab 22 and a first negative tab 23, the second electrode lead-out component 3a includes a second positive tab 32 and a second negative tab 33, and the first positive tab 22 is electrically connected to the second positive tab 32, and the first negative tab 23 is electrically connected to the second negative tab 33. In this way, the first battery cell 2 and the second battery cell 3 are connected in parallel. Compared with the series connection, the parallel connection between the first battery cell 2 and the second battery cell 3 can reduce the risk of short circuit in a local loop and prevent the electrolyte from being in a high-pressure environment.

In some embodiments, the third electrode lead-out component 2b includes a third tab 24, the fourth electrode lead-out component 3b includes a fourth tab 34, and the third tab 24 and the fourth tab 34 have opposite polarities. The third tab 24 is a positive tab, and the fourth tab 34 is a negative tab; or the third tab 24 is a negative tab, and the fourth tab 34 is a positive tab.

In the embodiment shown in Fig. 3 to Fig. 9, the first battery cell 2 and the second battery cell 3 each include three tabs. Two tabs extend from the first side S1 of the first main body part 21, which are the first positive tab 22 and the first negative tab 23 respectively; and one tab extends from the third side S3 of the first main body part 21, that is, the third tab 24. Two tabs extend from the second side S2 of the second main body part 31, which are the second positive tab 32 and the second negative tab 33 respectively; and one tab extends from the fourth side S4 of the second main body part 31, that is, the fourth tab 34. The first side S1 of the first main body part 21 and the second side S2 of the second main body part 31 are adjacent and arranged oppositely, and the first side S1 and the second side S2 are both located between the third side S3 of the first main body part 21 and the fourth side S4 of the second main body part 31.

In some embodiments, the battery cell further includes a first terminal post 61 and a second terminal post 71, the first terminal post 61 is electrically connected to the third tab 24, and the second terminal post 71 is electrically connected to the fourth tab 34. In the embodiment, the battery cell includes two terminal posts, and the two terminal posts are respectively electrically connected to the third tab 24 extending from the third side S3 of the first main body part 21 and the fourth tab 34 extending from the fourth side S4 of the second main body part 31.

In some embodiments, the battery cell further includes a first cover plate 4 and a second cover plate 5, the case 1 is provided with a first opening 11 and a second opening 12 arranged oppositely in the first direction x, the first cover plate 4 and the second cover plate 5 respectively close the first opening 11 and the second opening 12, the first terminal post 61 is arranged on the first cover plate 4, and the second terminal post 71 is arranged on the second cover plate 5.

In the embodiment of the present application, the first opening 11 and the second opening 12 are arranged oppositely in the first direction x. Therefore, the first cover plate 4 closing the first opening 11 is close to the third tab 24, and the first terminal post 61 is arranged on the first cover plate 4. Therefore, the distance between the third tab 24 and the first terminal post 61 can be effectively shortened, which facilitates the connection between the third tab 24 and the first terminal post 61, and is also conducive to shortening the length of the third tab 24, thereby reducing the space occupied by the third tab 24 and reducing the volume of the battery cell. Similarly, the second cover plate 5 closing the second opening 12 is close to the fourth tab 34, and the second terminal post 71 is arranged on the second cover plate 5; therefore, the distance between the fourth tab 34 and the second terminal post 71 can be effectively shortened, which facilitates the connection between the fourth tab 34 and the second terminal post 71, and is also conducive to shortening the length of the fourth tab 34, thereby reducing the space occupied by the fourth tab 34 and reducing the volume of the battery cell.

In some embodiments, the first main body part 21 includes a first positive electrode plate, a first negative electrode plate, and a first separator. The first positive electrode plate and the first negative electrode plate are wound or laminated to form the first main body part 21. The first separator is arranged between the first positive electrode plate and the first negative electrode plate. When the third tab 24 is a positive tab, a first end of the first positive electrode plate extends from the third side S3 of the first main body part 21 to form the third tab 24, and a first end of the first negative electrode plate is flush with the third side S3 of the first main body part 21. When the third tab 24 is a negative tab, the first end of the first negative electrode plate extends from the third side S3 of the first main body part 21 to form the third tab 24, and the first end of the first positive electrode plate is flush with the third side S3 of the first main body part 21.

By arranging the electrode plate with the polarity opposite to the third tab 24 to be flush with the third side S3, the electrode plate may be prevented from protruding, thereby shortening the length of the electrode plate, which may not only save the material of the electrode plate, but also reduce operations related to insulating the electrode plate, and save insulating components used for insulating the electrode plate from other live parts.

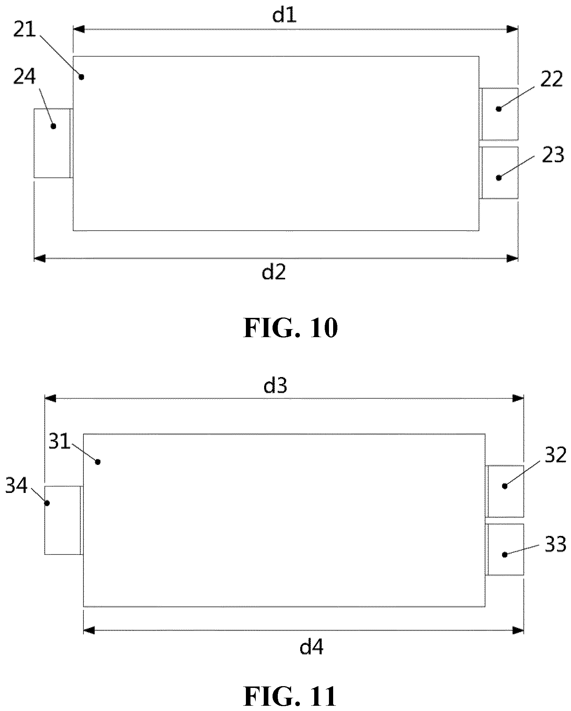

As shown in Fig. 10, the third tab 24 is a negative tab, the length of the first positive electrode plate is d1, the length of the first negative electrode plate is d2, and d2>d1.

In some embodiments, the second main body part 31 includes a second positive electrode plate, a second negative electrode plate, and a second separator. The second positive electrode plate and the second negative electrode plate are wound or laminated to form the second main body part 31. The second separator is arranged between the second positive electrode plate and the second negative electrode plate. When the fourth tab 34 is a positive tab, a first end of the second positive electrode plate extends from the fourth side S4 of the second main body part 31 to form the fourth tab 34, and a first end of the second negative electrode plate is flush with the fourth side S4 of the second main body part 31. When the fourth tab 34 is a negative tab, the first end of the second negative electrode plate extends from the fourth side S4 of the second main body part 31 to form the fourth tab 34, and the first end of the second positive electrode plate is flush with the fourth side S4 of the second main body part 31.

By arranging the electrode plate with the polarity opposite to the fourth tab 34 to be flush with the fourth side S4, the electrode plate may be prevented from protruding, thereby shortening the length of the electrode plate, which may not only save the material of the electrode plate, but also reduce operations related to insulating the electrode plate, and save insulating components used for insulating the electrode plate from other live parts.

As shown in Fig. 11, the fourth tab 34 is a positive tab, the length of the second positive electrode plate is d3, the length of the second negative electrode plate is d4, and d3>d4.

In some embodiments, the third electrode lead-out component 2b includes a third positive tab 25 and a third negative tab 26, and the fourth electrode lead-out component 3b includes a fourth positive tab 35 and a fourth negative tab 36.

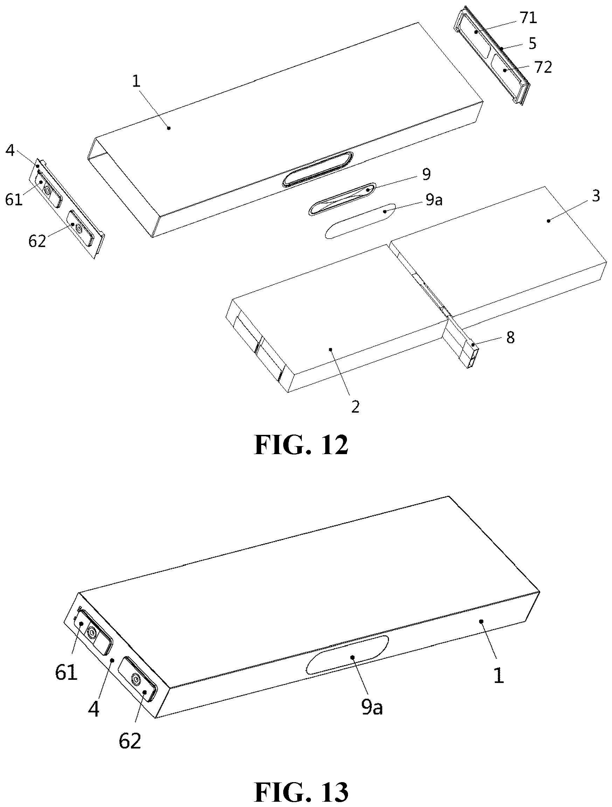

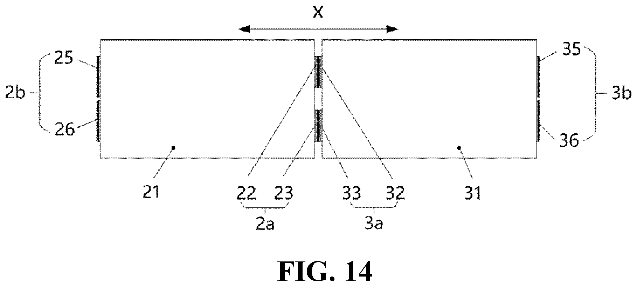

In the embodiments shown in Fig. 12 to Fig. 14, the first battery cell 2 and the second battery cell 3 each include four tabs. Two tabs extend from the first side S1 of the first main body part 21, which are the first positive tab 22 and the first negative tab 23 respectively; and two tabs also extend from the third side S3 of the first main body part 21, which are the third positive tab 25 and the third negative tab 26 respectively. Two tabs extend from the second side S2 of the second main body part 31, which are the second positive tab 32 and the second negative tab 33 respectively; and two tabs also extend from the fourth side S4 of the second main body part 31, which are the fourth positive tab 35 and the fourth negative tab 36 respectively. The first side S1 of the first main body part 21 and the second side S2 of the second main body part 31 are adjacent and arranged oppositely, and the first side S 1 and the second side S2 are both located between the third side S3 of the first main body part 21 and the fourth side S4 of the second main body part 31.

In some embodiments, the battery cell further includes a first terminal post 61, a second terminal post 71, a third terminal post 62, and a fourth terminal post 72, the first terminal post 61 is electrically connected to the third positive tab 25, the third terminal post 62 is electrically connected to the third negative tab 26, the second terminal post 71 is electrically connected to the fourth positive tab 35, and the fourth terminal post 72 is electrically connected to the fourth negative tab 36. In the embodiment, the battery cell includes four terminal posts, and the four terminal posts are respectively electrically connected to the two tabs extending from the third side S3 of the first main body part 21 and the two tabs extending from the fourth side S4 of the second main body part 31. By arranging the four terminal posts, the discharge capacity of the battery cell can be effectively improved.

In some embodiments, the battery cell further includes a first cover plate 4 and a second cover plate 5, the case 1 is provided with a first opening 11 and a second opening 12 arranged oppositely in the first direction x, the first cover plate 4 and the second cover plate 5 respectively close the first opening 11 and the second opening 12, both the first terminal post 61 and the third terminal post 62 are arranged on the first cover plate 4, and both the second terminal post 71 and the fourth terminal post 72 are arranged on the second cover plate 5.

In the embodiment of the present application, the first opening 11 and the second opening 12 are arranged oppositely in the first direction x. Therefore, the first cover plate 4 closing the first opening 11 is close to the third positive tab 25 and the third negative tab 26, and the first terminal post 61 and the third terminal post 62 are both arranged on the first cover plate 4. Therefore, the distance between the first terminal post 61 and the third positive tab 25 and the distance between the third terminal post 62 and the third negative tab 26 can be effectively shortened, which facilitates the connections between the first terminal post 61 and the third positive tab 25 and between the third terminal post 62 and the third negative tab 26, and is also conducive to shortening the lengths of the third positive tab 25 and the third negative tab 26, thereby reducing the space occupied by the third positive tab 25 and the third negative tab 26 and reducing the volume of the battery cell. Similarly, the second cover plate 5 closing the second opening 12 is close to the fourth positive tab 35 and the fourth negative tab 36, and the second terminal post 71 and the fourth terminal post 72 are both arranged on the second cover plate 5. Therefore, the distance between the second terminal post 71 and the fourth positive tab 35 and the distance between the fourth terminal post 72 and the fourth negative tab 36 can be effectively shortened, which facilitates the connections between the second terminal post 71 and the fourth positive tab 35 and between the fourth terminal post 72 and the fourth negative tab 36, and is also conducive to shortening the lengths of the fourth positive tab 35 and the fourth negative tab 36, thereby reducing the space occupied by the fourth positive tab 35 and the fourth negative tab 36 and reducing the volume of the battery cell.

In some embodiments, the case 1, the first cover plate 4, and the second cover plate 5 may be independent components, or the case 1, the first cover plate 4, and the second cover plate 5 may be integrated. Specifically, the first cover plate 4 and the second cover plate 5 may respectively form a common connection surface with the case 1 before other components are mounted into the shell. When the case 1 needs to be packaged, the first cover plate 4 and the second cover plate 5 may cover the case 1, and the case 1 is sealed to the first cover plate 4 and the second cover plate 5 as a whole.

The case 1 is a component used for fitting the first cover plate 4 and the second cover plate 5 to form the internal environment of the battery cell 20a. The first cover plate 4 and the second cover plate 5 cover the opening of the case 1 so as to isolate the internal environment of the battery cell 20a from the external environment. Without limitation, the shapes of the first cover plate 4 and the second cover plate 5 may be adapted to the shape of the case 1 to fit the case 1. Optionally, the first cover plate 4 and the second cover plate 5 may be made of a material with a certain hardness and strength, so that the first cover plate 4 and the second cover plate 5 are not easily deformed when they are extruded and expanded, so that the battery cell 20a is capable of having higher structural strength, and the safety performance may also be improved.

In some embodiments, the first cover plate 4 and the second cover plate 5 may also be provided with a pressure relief mechanism for releasing an internal pressure when the internal pressure or temperature of the battery cell 20a reaches a threshold value.

In some embodiments, a length direction of the first battery cell 2 is parallel to the first direction x, and a length direction of the second battery cell 3 is parallel to the first direction x. Such an arrangement allows the first battery cell 2 and the second battery cell 3 to be arranged in the length direction thereof, and the electrode lead-out components respectively extending from both ends of the first battery cell 2 and the second battery cell 3 may be located on shorter sides of the battery cell, thereby effectively reducing the volume of the battery cell.

In some embodiments, the battery cell further includes a bracket 8, and the bracket 8 is arranged between the first battery cell 2 and the second battery cell 3. The bracket 8 is used for supporting the first battery cell 2 and the second battery cell 3.

Structures of some embodiments of the battery cell provided in the present application are illustrated below with reference to Fig. 3 to Fig. 14.

In the embodiment of the battery cell provided in the present application, the battery cell includes a case 1, as well as a first battery cell 2 and a second battery cell 3 arranged inside the case 1.

The case 1 may be in the shape of a rectangular parallelepiped. The first battery cell 2 and the second battery cell 3 may also be in the shape of a rectangular parallelepiped.

The length of the case 1 is greater than a sum of the lengths of the first battery cell 2 and the second battery cell 3. The first battery cell 2 and the second battery cell 3 are arranged inside the case 1 in a length direction. The length directions of the first battery cell 2 and the second battery cell 3 are parallel to the length direction of the case 1.

A first opening 11 and a second opening 12 are arranged at both ends of the case 1 respectively. A plane where the first opening 11 is located and a plane where the second opening 12 is located are perpendicular to the length direction of the case 1. The first cover plate 4 closes the first opening 11, and the second cover plate 5 closes the second opening 12.

The case 1 is further provided with a bracket 8 between the first battery cell 2 and the second battery cell 3. An explosion-proof valve 9 and a patch 9a attached to the outside of the explosion-proof valve 9 are arranged on a side of the case 1.

In the embodiment shown in Fig. 3 to Fig. 9, the first battery cell 2 and the second battery cell 3 each include three tabs. The first battery cell 2 includes the first main body part 21, two tabs extend from the first side S1 of the first main body part 21, which are the first positive tab 22 and the first negative tab 23 respectively; and one tab extends from the third side S3 of the first main body part 21, that is, the third tab 24. The second battery cell 3 includes the second main body part 31, two tabs extend from the second side S2 of the second main body part 31, which are the second positive tab 32 and the second negative tab 33 respectively; and one tab extends from the fourth side S4 of the second main body part 31, that is, the fourth tab 34. The first side S1 of the first main body part 21 and the second side S2 of the second main body part 31 are adjacent and arranged oppositely, and the first side S1 and the second side S2 are both located between the third side S3 of the first main body part 21 and the fourth side S4 of the second main body part 31.

As shown in Fig. 3 to Fig. 5, the battery cell includes two terminal posts. The first terminal post 61 is arranged on the first cover plate 4 and is electrically connected to the third tab 24. The second terminal post 71 is arranged on the second cover plate 5 and is electrically connected to the fourth tab 34.

The first positive tab 22 is electrically connected to the second positive tab 32, and the first negative tab 23 is electrically connected to the second negative tab 33.

The first positive tab 22 and the second positive tab 32 may be directly attached to each other and electrically connected, or may be connected through the adapter sheet 10. The electrical connection of the first negative tab 23 and the second negative tab 33 may be that they are directly attached to each other and electrically connected, or may be connected through another adapter sheet 10.

In the embodiments shown in Fig. 6 and Fig. 7, the first positive tab 22 includes an L-shaped connecting portion, and the connecting portion includes a first connection surface 221 perpendicular to the first direction x. The second positive tab 32 includes an L-shaped connecting portion, and the connecting portion includes a second connection surface 321 perpendicular to the first direction x. The first positive tab 22 and the second positive tab 32 are welded and connected through the first connection surface 221 and the second connection surface 321. The first connection surface 221 and the second connection surface 321 are attached to each other.

In the embodiments shown in Fig. 8 and Fig. 9, the adapter sheet 10 is connected between the first connection surface 221 and the second connection surface 321.

The adapter sheet 10 is integrally in a "Q" shape. The adapter sheet 10 includes a first supporting portion 101, a second supporting portion 102, a third supporting portion 103, and a fourth supporting portion 104. The first supporting portion 101 and the second supporting portion 102 are connected to form a U-shaped structure. A groove 105 is formed between the first supporting portion 101 and the second supporting portion 102. The third supporting portion 103 is connected to the first supporting portion 101, and the fourth supporting portion 104 is connected to the second supporting portion 102. The first supporting portion 101 and the second supporting portion 102 respectively include a part perpendicular to the length direction of the case 1 and a part parallel to the length direction of the case 1. Both the third supporting portion 103 and the fourth supporting portion 104 are parallel to the length direction of the case 1.

The first positive tab 22 includes an L-shaped connecting portion, and the connecting portion includes a first connecting portion 222 parallel to the length direction of the case 1 and a third connecting portion perpendicular to the length direction of the case 1. The first connection surface 221 is located at the third connecting portion. The second positive tab 32 includes an L-shaped connecting portion, and the connecting portion includes a second connecting portion 322 parallel to the length direction of the case 1 and a fourth connecting portion perpendicular to the length direction of the case 1. The second connection surface 321 is located at the fourth connecting portion.

The first supporting portion 101 is used for supporting the third connecting portion, and the first supporting surface 101A of the first supporting portion 101 and the first connection surface 221 are adhered to each other and connected by welding. The second supporting portion 102 is used for supporting the fourth connecting portion, and the second supporting surface 102A of the second supporting portion 102 and the second connection surface 321 are adhered to each other and connected by welding. The third supporting portion 103 is used for supporting the first connecting portion 222, and the fourth supporting portion 104 is used for supporting the second connecting portion 322.

For the first battery cell 2 including three tabs, as shown in Fig. 10, the first main body part 21 includes a first positive electrode plate, a first negative electrode plate, and a first separator. The first positive electrode plate and the first negative electrode plate are wound or stacked to form the first main body part 21. The first separator is arranged between the first positive electrode plate and the first negative electrode plate. The third tab 24 is the negative tab. The first end of the first negative electrode plate extends from the third side S3 of the first main body part 21 to form the third tab 24, and the first end of the first positive electrode plate is flush with the third side S3 of the first main body part 21. The length of the first positive electrode plate is d1, the length of the first negative electrode plate is d2, and d2>d1.

For the second battery cell 3 including three tabs, as shown in Fig. 11, the second main body part 31 includes a second positive electrode plate, a second negative electrode plate, and a second separator. The second positive electrode plate and the second negative electrode plate are wound or stacked to form the second main body part 31. The second separator is arranged between the second positive electrode plate and the second negative electrode plate. The fourth tab 34 is the positive tab. The first end of the second positive electrode plate extends from the fourth side S4 of the second main body part 31 to form the fourth tab 34, and the first end of the second negative electrode plate is flush with the fourth side S4 of the second main body part 31. The length of the second positive electrode plate is d3, the length of the second negative electrode plate is d4, and d3>d4.

In the embodiments shown in Fig. 12 to Fig. 14, the first battery cell 2 and the second battery cell 3 each include four tabs. Two tabs extend from the first side S1 of the first main body part 21, which are the first positive tab 22 and the first negative tab 23 respectively; and two tabs also extend from the third side S3 of the first main body part 21, which are the third positive tab 25 and the third negative tab 26 respectively. Two tabs extend from the second side S2 of the second main body part 31, which are the second positive tab 32 and the second negative tab 33 respectively; and two tabs also extend from the fourth side S4 of the second main body part 31, which are the fourth positive tab 35 and the fourth negative tab 36 respectively.

In the embodiment, the battery cell includes four terminal posts. The first terminal post 61 is electrically connected to the third positive tab 25, the third terminal post 62 is electrically connected to the third negative tab 26, the second terminal post 71 is electrically connected to the fourth positive tab 35, and the fourth terminal post 72 is electrically connected to the fourth negative tab 36. The first terminal post 61 and the third terminal post 62 are both arranged on the first cover plate 4, and the second terminal post 71 and the fourth terminal post 72 are both arranged on the second cover plate 5. In the embodiment, two terminal posts are provided on both sides of the battery cell, and the discharge capability is better.

Although the present application has been described with reference to the preferred embodiments, various improvements may be made thereto and components thereof may be replaced with equivalents without departing from the scope of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A battery cell, comprising:
a case (1);
a first battery cell (2) arranged inside the case (1), the first battery cell (2) comprising a first main body part (21) and a first electrode lead-out component (2a) extending from a first side (S1) of the first main body part (21); and
a second battery cell (3) arranged inside the case (1), the second battery cell (3) comprising a second main body part (31) and a second electrode lead-out component (3a) extending from a second side (S2) of the second main body part (31);
wherein the first battery cell (2) and the second battery cell (3) are arranged in a first direction (x), the first side (S1) of the first main body part (21) and the second side (S2) of the second main body part (31) are adjacent and arranged oppositely, the first electrode lead-out component (2a) comprises a first connection surface (221) inclined with respect to the first direction (x), the second electrode lead-out component (3a) comprises a second connection surface (321) inclined with respect to the first direction (x), and the first connection surface (221) is electrically connected to the second connection surface (321).

2. The battery cell according to claim 1, wherein the first connection surface (221) is a plane and perpendicular to the first direction (x); and/or the second connection surface (321) is a plane and perpendicular to the first direction (x).

3. The battery cell according to claim 1 or 2, further comprising an adapter sheet (10), wherein the adapter sheet (10) is connected between the first connection surface (221) and the second connection surface (321).

4. The battery cell according to claim 3, wherein the adapter sheet (10) comprises a compressible portion.

5. The battery cell according to claim 3 or 4, wherein the adapter sheet (10) comprises a first supporting portion (101) and a second supporting portion (102) connected to each other, the first supporting portion (101) supports the first connection surface (221), the second supporting portion (102) supports the second connection surface (321), and a groove (105) is arranged between the first supporting portion (101) and the second supporting portion (102).

6. The battery cell according to claim 5, wherein the first supporting portion (101) comprises a first supporting surface (101A) attached to the first connection surface (221), and the second supporting portion (102) comprises a second supporting surface (102A) attached to the second connection surface (321).

7. The battery cell according to claim 5 or 6, wherein the first electrode lead-out component (2a) further comprises a first connecting portion (222) extending in the first direction (x), the second electrode lead-out component (3a) further comprises a second connecting portion (322) extending in the first direction (x), the adapter sheet (10) comprises a third supporting portion (103) connected to the first supporting portion (101) and a fourth supporting portion (104) connected to the second supporting portion (102), the third supporting portion (103) is used for supporting the first connecting portion (222), and the fourth supporting portion (104) is used for supporting the second connecting portion (322).

8. The battery cell according to any one of claims 1 to 7, wherein the first electrode lead-out component (2a) comprises a first positive tab (22) and a first negative tab (23), the second electrode lead-out component (3a) comprises a second positive tab (32) and a second negative tab (33), the first positive tab (22) is electrically connected to the second positive tab (32), and the first negative tab (23) is electrically connected to the second negative tab (33).

9. The battery cell according to any one of claims 1 to 8, wherein a length direction of the first battery cell (2) is parallel to the first direction (x), and a length direction of the second battery cell (3) is parallel to the first direction (x).

10. The battery cell according to any one of claims 1 to 9, wherein the first battery cell (2) comprises a third tab (24) that is lead out from a third side (S3) of the first main body part (21) opposite to the first side (S1), the second battery cell (3) comprises a fourth tab (34) that is lead out from a fourth side (S4) of the second main body part (31) opposite to the second side (S2), and the third tab (24) and the fourth tab (34) have opposite polarities.

11. The battery cell according to claim 10, further comprising a first terminal post (61) and a second terminal post (71), wherein the first terminal post (61) is electrically connected to the third tab (24), and the second terminal post (71) is electrically connected to the fourth tab (34).

12. The battery cell according to claim 11, further comprising a first cover plate (4) and a second cover plate (5), wherein the case (1) is provided with a first opening (11) and a second opening (12) arranged oppositely in the first direction (x), the first cover plate (4) and the second cover plate (5) respectively close the first opening (11) and the second opening (12), the first terminal post (61) is arranged on the first cover plate (4), and the second terminal post (71) is arranged on the second cover plate (5).

13. The battery cell according to any one of claims 10 to 12, wherein
the first main body part (21) comprises a first positive electrode plate, a first negative electrode plate, and a first separator, the first positive electrode plate and the first negative electrode plate are wound or laminated to form the first main body part (21), the first separator is arranged between the first positive electrode plate and the first negative electrode plate, a first end of the first positive electrode plate extends from the third side (S3) of the first main body part (21) to form the third tab (24), and a first end of the first negative electrode plate is flush with the third side (S3) of the first main body part (21); alternatively, the first end of the first negative electrode plate extends from the third side (S3) of the first main body part (21) to form the third tab (24), and the first end of the first positive electrode plate is flush with the third side (S3) of the first main body part (21); and/or,
the second main body part (31) comprises a second positive electrode plate, a second negative electrode plate, and a second separator, the second positive electrode plate and the second negative electrode plate are wound or laminated to form the second main body part (31), the second separator is arranged between the second positive electrode plate and the second negative electrode plate, a first end of the second positive electrode plate extends from the fourth side (S4) of the second main body part (31) to form the fourth tab (34), and a first end of the second negative electrode plate is flush with the fourth side (S4) of the second main body part (31); alternatively, the first end of the second negative electrode plate extends from the fourth side (S4) of the second main body part (31) to form the fourth tab (34), and the first end of the second positive electrode plate is flush with the fourth side (S4) of the second main body part (31).

14. The battery cell according to any one of claims 1 to 9, wherein the first battery cell (2) comprises a third positive tab (25) and a third negative tab (26) that are led out from a third side (S3) of the first main body part (21) opposite to the first side (S 1), and the second battery cell (3) comprises a fourth positive tab (35) and a fourth negative tab (36) that are led out from a fourth side (S4) of the second main body part (31) opposite to the second side (S2).

15. The battery cell according to claim 14, further comprising a first terminal post (61), a second terminal post (71), a third terminal post (62), and a fourth terminal post (72), wherein the first terminal post (61) is electrically connected to the third positive tab (25), the third terminal post (62) is electrically connected to the third negative tab (26), the second terminal post (71) is electrically connected to the fourth positive tab (35), and the fourth terminal post (72) is electrically connected to the fourth negative tab (36).

16. The battery cell according to claim 15, further comprising a first cover plate (4) and a second cover plate (5), wherein the case (1) is provided with a first opening (11) and a second opening (12) arranged oppositely in the first direction (x), the first cover plate (4) and the second cover plate (5) respectively close the first opening (11) and the second opening (12), both the first terminal post (61) and the third terminal post (62) are arranged on the first cover plate (4), and both the second terminal post (71) and the fourth terminal post (72) are arranged on the second cover plate (5).

17. A battery, comprising the battery cell according to any one of claims 1 to 16.

18. An electrical device, comprising the battery cell according to any one of claims 1 to 16 and/or the battery according to claim 17, for supplying electric energy to the electrical device.
